Europäisches Patentamt

European Patent Office

Office européen des brevets

(11) Veröffentlichungsnummer: **0 231 405**
B1

(12) EUROPÄISCHE PATENTSCHRIFT

(45) Veröffentlichungstag der Patentschrift :
28.09.88

(21) Anmeldenummer : 86100623.7

(22) Anmeldetag : 18.01.86

(51) Int. Cl.⁴ : **G 01 N 27/02**, G 01 N 29/00,
G 01 N 27/12

(54) Verfahren und Vorrichtung zum Feststellen der Beladung von Aktivkohlefiltern.

(43) Veröffentlichungstag der Anmeldung :
12.08.87 Patentblatt 87/33

(45) Bekanntmachung des Hinweises auf die Patenterteilung : 28.09.88 Patentblatt 88/39

(84) Benannte Vertragsstaaten :
AT BE CH DE FR GB IT LI NL SE

(56) Entgegenhaltungen :
DE-A- 2 525 567
FR-A- 2 347 679
FR-E-    48 588
US-A- 4 237 726
US-A- 4 472 356
US-A- 4 530 706

(73) Patentinhaber : Honeywell-Elac-Nautik GmbH
Westring 425-429
D-2300 Kiel 1 (DE)

(72) Erfinder : Boscher, Jörg, Dr. Dipl.-Phys.
Brunnenweg 1
D-2308 Preetz (DE)
Erfinder : Biehl, Karl-Ernst, Dr. Dipl.-Phys.
Salisweg 58
D-6450 Hanau 1 (DE)

(74) Vertreter : Rentzsch, Heinz et al
Honeywell Europe S.A. Holding KG Patent- und Lizenzabteilung Kaiserleistrasse 55
D-6050 Offenbach am Main (DE)

## Beschreibung

Die Erfindung betrifft ein Verfahren zum Feststellen der Beladung eines Aktivkohlefilters mit Gasen und Dämpfen sowie eine Vorrichtung zur Anwendung des Verfahrens.

Aktivkohlefilter werden zur Entfernung von Gasen und Dämpfen aus der Luft verwendet. Dabei wird die Fähigkeit von Aktivkohle und insbesondere von imprägnierter Aktivkohle ausgenutzt, Gase und Dämpfe durch Physisorption und Chemisorption zu binden. Durch die Aufnahme der Gase und Dämpfe (Beladung) vermindert sich gleichzeitig die Rückhaltekapazität des Filters, bis es beim Erreichen einer Sättigungsbeladung zum Durchbruch kommt, d. h. die Gase und Dämpfe das Filter ungehindert durchdringen. Insbesondere bei der Filterung von Luft, die toxische Gase oder Dämpfe enthält, ist es erforderlich, die Erschöpfung des Filters rechtzeitig vor dem Durchbruch festzustellen.

Es sind zwei Gruppen von Verfahren zur Feststellung des Beladungszustandes von Aktivkohlefiltern bekannt. Die erste Gruppe erfordert den Ausbau des Filters oder Manipulation an Filterein- und -auslaß. Hierzu gehören das Wiegen des Filters und der $CO_2$-Pulstest (vergl. NRL Report 6793 « The $CO_2$ Pulse Technique for Determining Residual Gas Life of Charcoal Beds »). Diese Verfahren können im Einsatz des Filters nicht verwendet werden und geben keine Echt-Zeit-Aussage über den Sättigungszustand des Filters. Eine zweite Gruppe von Verfahren erlaubt die Feststellung des Sättigungsgrades unter Einsatzbedingungen oder Simulationsbedingungen. Dabei sind dem Filter Gasdetektoren oder -indikatoren nachgeschaltet. Sie liefern eine Anzeige, wenn ein bestimmtes Gas auf Grund eingeschränkter Rückhaltefähigkeit des Filters bis zum Ort des Detektors gelangen kann. Nachteilig ist, daß Detektoren bzw. Indikatoren nur auf bestimmte Gase oder Dämpfe ansprechen. Sind statt dessen andere Gase oder Dämpfe in der Strömung enthalten, so wird eine Erschöpfung des Filters nicht bemerkt. Auf Grund der kombinierten adsorptiven und chemisorptiven Wirkung bieten imprägnierte Aktivkohlefilter zwar Schutz gegen alle bekannten gas- und dampfförmigen Giftstoffe in der Luft. Die Detektoren und Indikatoren besitzen demgegenüber stets nur eine begrenzte Detektionsbandbreite.

So wurde vorgeschlagen, $SnO_2$ oder $ZrO_2$-Detektoren in die Filterkohle einzulagern. Diese Detektoren erlauben den Nachweis brennbarer Gase und können dementsprechend z. B. den Durchlaß von Kohlenmonoxid oder Methan anzeigen. Sie sind jedoch nicht geeignet, in ABC-Schutzfiltern den Durchbruch von Nerven-, Blut- oder Lungengiften festzustellen. Die gleiche Einschränkung gilt für Farbindikatoren, die hinter einem Schaufenster ins Filter eingelassen werden. Bei diesen Indikatoren wird die chemische Reaktion eines Reagens mit dem nachzuweisenden Gas oder Dampf durch einen Farbumschlag angezeigt. Die Farbänderung muß visuell festgestellt werden. Eine Automatisierung des Verfahrens ist an sich möglich, erfordert aber einen relativ großen Aufwand.

Weiterhin ist aus US-A 44 72 356 ein Verfahren gemäß Gattungsbegriff des Anspruchs 1 bekannt, bei dem die elektrische Impedanz zweier in den Filterkörper eingelagerter chemoelektrischer Umformer gemessen wird. Es handelt sich dabei um je ein sich über den gesamten Querschnitt des Filters erstreckendes Nylongitter, welches mit einen halbleitenden Polymer beschichtet ist. Die chemische Reaktion des auszufilternden Gases mit der Polymerbeschichtung ändert die Volumenleitfähigkeit des Polymers und damit den Strom in einem die beiden Umformer aufweisenden Stromkreis. Die beiden Umformer sind in unterschiedlichem Abstand vom Austrittsende des Filters angeordnet, so daß der der Eintrittsseite näherliegende Umformer im Falle einer Erschöpfung des Filters eher mit dem dann vom Filter nicht zurückgehaltenen Gas in Berührung kommt und seine Leitfähigkeit ändert als der an der Ausgangsseite des Filters angeordnete Umformer. Beide Umformer werden aus einer gemeinsamen Stromquelle gespeist und sind an die beiden Eingänge eines Vergleichers angeschlossen, der ein Ausgangssignal entsprechend dem Logarithmus des Verhältnisses der über die beiden Umformer fließenden Ströme leifert. Gelangt das zu messende Gas weder zum einen noch zum anderen Detektor, so sind beide Ströme gleich, ihr Verhältnis also gleich 1 und damit dessen Logarithmus gleich 0. Nimmt hingegen die Durchlässigkeit des Filters für das Gas zu, so ändert sich zunächst die Leitfähigkeit des der Eingangsseite näher angeordneten Umformers, das Verhältnis der Ströme weicht von 1 ab und es entsteht ein Ausgangssignal, dessen Höhe angezeigt und bei Überschreitung eines Grenzwertes zur Auslösung eines Alarms genutzt wird. Das Filter muß dann ausgetauscht werden.

Diese bekannte Anordnung ermöglicht zwar die fortlaufende Überwachung des Filters im Betrieb, spricht aber wiederum nur auf bestimmte Gase an, nämlich auf diejenigen, welche mit der Polymerschicht des Umformers in einem die elektrische Leitfähigkeit ändernden Sinne chemisch reagieren.

Der Erfindung liegt die Aufgabe zugrunde, unter Vermeidung der Hauptnachteile der geschilderten Methoden, den Sättigungsgrad oder die Überschreitung eines festgesetzten Sättigungsgrades in einem Kohlefilter automatisch anzuzeigen. Die Anzeige soll kontinuierlich während des bestimmungsgemäßen Betriebes des Filters aber auch in Betriebspausen möglich sein. Sie soll den Beladungszustand unabhängig von der Art der adsorptiv oder chemisorptiv gebundenen Gase oder Dämpfe feststellen. Zusätzlich besteht mitunter die Aufgabe, bei der Anzeige den Wasserdampfanteil der Beladung von dem Anteil anderer Gase oder Dämpfe zu trennen. Die Lösung dieser Aufgabe gelingt durch das im Anspruch 1 gekennzeichnete Verfahren. Eine Vorrichtung zur dessen Durchführung ist Gegenstand des Anspruchs 6. Vorteilhafte Ausgestaltungen des Verfahrens und der Vorrichtung sind jeweils in den abhängigen Ansprüchen beschrieben.

Die akustische und elektrische Impedanz sind physikalische Größen, die sich bei Beladung eines imprägnierten Aktivkohlefilters ändern. Durch Adsorption und Chemisorption von Gasen und Dämpfen in dem Mikroporenvolumen der Aktivkohlekörper erhöht sich die Masse des Mediums, ohne daß gleichzeitig eine Vergrößerung des Makrovolumens auftritt. Das bedeutet eine Erhöhung der mittleren Dichte des Mediums. Die Dichteerhöhung führt wiederum zur Veränderung der akustischen Übertragungseigenschaften des Mediums. Bild 1 zeigt die akustische Transmission Q einer Aktivkohleschicht als Funktion der Schallfrequenz F für zwei Beladungszustände mit einer Testsubstanz DMMP. Die akustische Leitfähigkeit Q ergibt sich als Amplitudenverhältnis des akustischen Empfangssignals $U_2$ zum akustischen Sendesignal $U_1$. Die Kurve $Q_1$ zeigt den Verlauf bei unbeladener Kohle und die Kurve $Q_2$ bei gesättigter Kohle. Die Meßkurven zeigen, daß die Transmission der mit 10 Gewichtsprozenten DMMP beladenen und damit fast gesättigten Aktivkohle gegenüber dem unbeladenen Zustand im Frequenzbereich 1 - 7 kHz merklich erhöht ist. Eine Änderung der elektrischen Impedanz durch die Beladung mit DMMP wurde nicht festgestellt.

Eine Beladung der Aktivkohle mit Wasserdampf wirkt sich prinzipiell in gleicher Weise auf die akustischen Eigenschaften aus wie die Beladung mit DMMP. Zusätzlich tritt hier aber eine Veränderung der elektrischen Impedanz auf. Sie wird verursacht durch Lösungsvorgänge bei der Wechselwirkung des Wasserdampfs mit der Metallsalzimprägnierung der Kohle.

Die Beladung durch Wasserdampf ist also durch gleichzeitige Änderung der akustischen und elektrischen Impedanz gekennzeichnet. Bei der Beladung mit von Wasserdampf verschiedenen Gasen und Dämpfen tritt dagegen nur eine Änderung der akustischen Impedanz auf. Da diese Änderung durch den Massen- bzw. Dichtezuwachs bedingt ist, überlagern sich die Effekte von mehreren gleichzeitig oder nacheinander sorptiv gebundenen Gasen oder Dämpfen additiv.

Durch Eichmessungen an unbeladener Filterkohle kann die Abhängigkeit der elektrischen und akustischen Impedanz bestimmt werden. Die Messung jeder dieser beiden Impedanzen erlaubt dann die Bestimmung der Wasserdampfbeladung. Ist das Filter außer mit Wasserdampf auch noch mit anderen Gasen und Dämpfen beladen, so erlaubt die Messung der elektrischen Impedanz weiterhin eine Bestimmung des Wasserdampfanteils. Damit kann über die Eichmessungen auch der Wasserdampfanteil der akustischen Impedanz bestimmt werden. Durch Differenzbildung geeigneter von der akustischen Impedanz abgeleiteter Größen (Masse, Dichte) kann der vom Wasserdampf unabhängige Beladungsanteil durch Gase und Dämpfe abgetrennt werden.

In einer vorteilhaften Ausgestaltung des Verfahrens gelingt es, ohne solche Eichmessungen auszukommen. Durch Verwendung von unbeladener Vergleichskohle in einer hermetisch abgeschlossenen Kammer können Referenzwerte (Eichwerte) gleichzeitig mit den Meßwerten erzeugt und mit ihnen analog elektrisch verarbeitet werden. Vorteilhafte Weiterbildungen des Verfahrens und Ausgestaltungen zu seiner Durchführung geeigneter Vorrichtungen ergeben sich aus den Unteransprüchen.

Die Erfindung wird nachfolgend anhand eines Ausführungsbeispiels erläutert. Hierzu ist in

Fig. 2 schematisch eine Vorrichtung zur Anwendung des erfindungsgemäßen Verfahrens und in

Fig. 3 das Blockschaltbild einer zugehörigen Ansteuer- und Auswerteschaltung dargestellt.

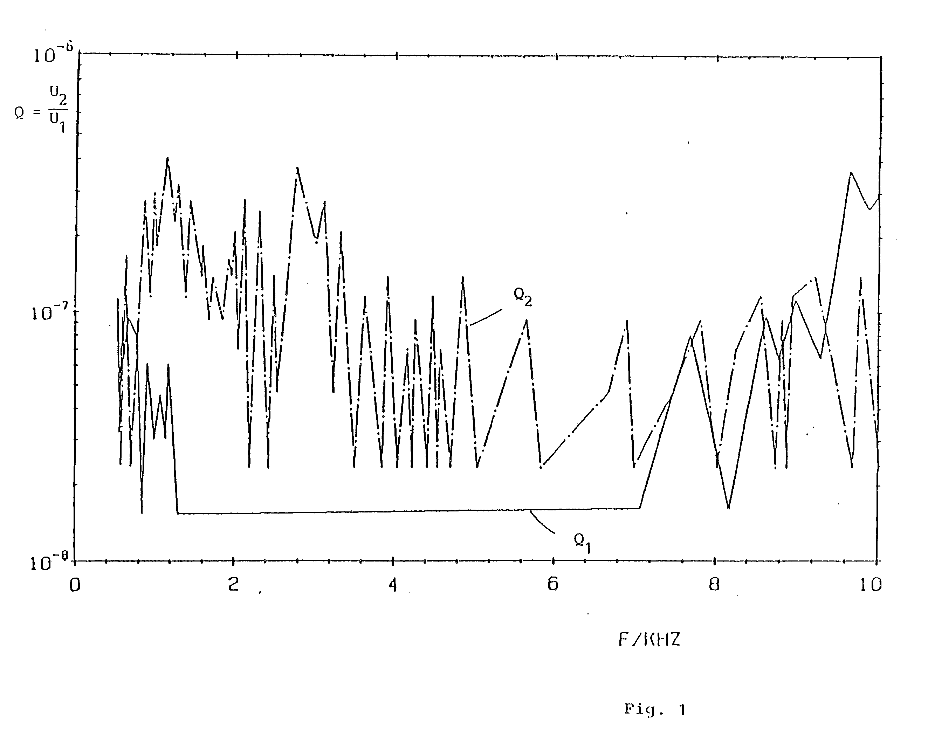

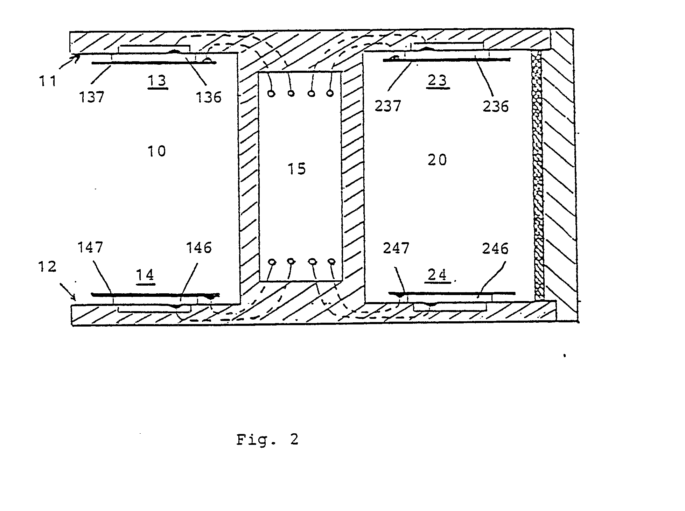

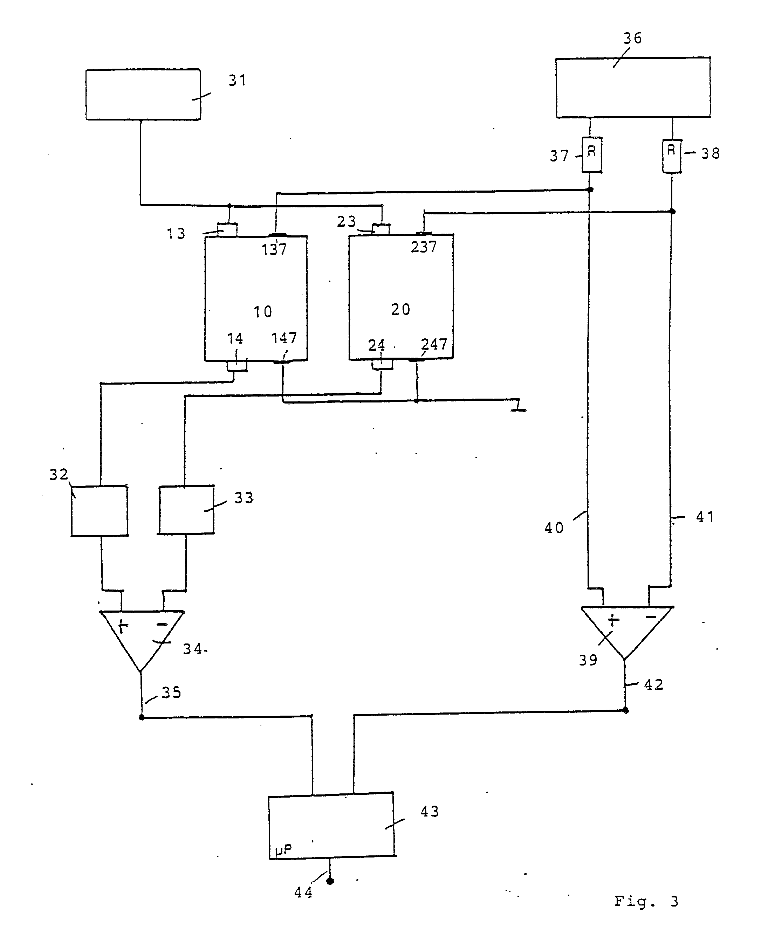

Hauptbestandteile der Vorrichtung sind eine Meßkammer 10 und eine Referenzkammer 20. Die Meßkammer 10 ist an zwei gegenüberliegenden Seiten und an der Stirnfläche offen. Die gesamte Vorrichtung wird in das Aktivkohlefilter in einer Weise eingebracht, daß die Meßkammer vollständig mit Aktivkohle ausgefüllt wird. Dabei ist die Vorrichtung so orientiert, daß die Strömungsrichtung der Luft im Filter parallel zu den beiden Kammerwänden 11, 12 und senkrecht zur Zeichnungsebene von Fig. 2 erfolgt. Das von der Meßkammer 10 aufgenommene Aktivkohlevolumen wird so gewählt, daß die Messung des Beladungsgrades dieses Teilvolumens eine Aussage über den Sättigungsgrad bzw. die restliche Lebensdauer des Gesamtfilters erlaubt.

Die Referenzkammer 20 enthält dagegen unbeladene Vergleichskohle aus derselben Charge wie das Filter, die in frischem Zustand in die Kammer eingebracht und hermetisch darin abgeschlossen wurde. Die Packungsdichte der Aktivkohle ist in beiden Kammern gleich. In beide Kammern ist jeweils ein elektroakustischer Wandler 13 bzw. 23 als Sender sowie ein weiterer Wandler 14 bzw. 24 als Empfänger vorgesehen. Die Wandler bestehen z. B. jeweils aus einer piezokeramischen Scheibe 136, 146 bzw. 236, 246, auf die eine Metallmembran 137, 147 ; 237, 247 aufgeklebt ist. Die Metallmembran dient gleichzeitig als Elektrode zur Messung der elektrischen Impedanz der dazwischen befindlichen Aktivkohleschicht.

In einer dritten Kammer 15 sind elektronische Bauteile zur Energieversorgung, Signalerzeugung und Signalverarbeitung untergebracht. Die elektroakustischen Wandler 13 und 23 werden so angesteuert, daß sie ein akustisches Signal, z. B. im Frequenzbereich zwischen 1 und 7 kHz mit einer bestimmten Schallstärke aussenden. Die gegenüberliegenden Wandler 14 und 24 empfangen ein akustisches Signal mit einer entsprechend der akustischen Impedanz der Aktivkohleschicht verminderten Schallstärke. Das Verhältnis des im Empfänger erzeugten elektrischen Signals zum Steuersignal des Sendewandlers ist ein Maß für die akustische Impedanz des Meßvolumens.

In Fig. 3 sind die Meßkammer 10 und die Referenzkammer 20 zusammen mit den zugehörigen Ansteuer- und Auswerteschaltungen dargestellt. Dabei sind die der Messung der elektrischen Impedanz dienenden Elektroden 137, 147 ; 237, 247 der besseren Übersichtlichkeit halber getrennt von den Wandlern 13, 14, 23 und 24 eingezeichnet. Sie können jedoch wie in Fig. 2 dargestellt zugleich Teil dieser Wandler sein. Der Sendewandler 13 in der Meßzelle 10 und der Sendewandler 23 in der Referenzzelle 20 werden gemeinsam von einem Oszillator 31 mit einem elektrischen Signal im Frequenzbereich zwischen 1 und 7 kHz angesteuert. Dabei kann eine Einzelfrequenz in diesem Frequenzbereich erzeugt oder das Signal über den genannten Frequenzbereich gewobbelt werden. Die akustischelektrischen Empfangswandler 14 und 24 empfangen der akustischen Impedanz der Kohleschicht in den beiden Zellen entsprechend geschwächte Signale, wandeln sie in elektrische Signale um und liefern sie über Verstärker 32 bzw. 33 an die beiden Eingänge einer Subtrahierschaltung 34, welche an ihrem Ausgang 35 ein Signal liefert, welches der Differenz der akustischen Impedanzen entspricht und damit für die Änderung der akustischen Impedanz in der Meßzelle 10 durch die Beladung des Filters mit Wasserdampf und sonstigen Dämpfen und Gasen gegenüber der akustischen Impedanz des unbeladenen Filters, entsprechend dem Zustand der Referenzzelle 20, kennzeichnend ist.

Von einer Gleichspannungsquelle 36 wird über Vorwiderstände 37 und 38 eine Spannung an die Elektrodenpaare 137, 147 und 237, 247 gelegt. Der Strom über die zwischen den Elektroden jedes Elektrodenpaares befindliche Filterschicht und damit der Strom durch die Widerstände 37 und 38 ändert sich in Abhängigkeit von der elektrischen Impedanz der Filterschicht in der Meßkammer 10 bzw. der Referenzkammer 20. Folglich ist der Spannungsabfall an den Widerständen 37 und 38 und damit die den beiden Eingängen der Subtrahierschaltung 39 über die Leitung 40 und 41 zugeführte Spannung ein Maß für die elektrische Impedanz der Filterkohle in der Meßzelle 10 bzw. der Referenzzelle 20. Die Subtrahierschaltung 39 liefert also an ihrem Ausgang 42 ein Signal, welches die Änderung der elektrischen Impedanz in der Meßzelle 10 infolge der Beladung seiner Aktivkohleschicht mit Wasserdampf kennzeichnet. Die Beladung der Kohle in der Meßzelle 10 mit anderen Gasen oder Dämpfen hat wie oben erwähnt, keinen Einfluß auf die elektrische Impedanz. Das auf der Leitung 35 anstehende, von der Gesamtbeladung der Meßzelle abhängige Signal sowie das auf der Leitung 42 vorhandene, nur von der Wasserdampfbeladung der Meßzelle abhängige Signal werden einer Auswerteschaltung 43 zugeleitet, welche einen A/D-Umsetzer mit nachgeschaltetem Mikroprozessor umfaßt und in der durch Vergleich dieser beiden Signale ein allein von der Beladung mit den auszufilternden Gasen oder Dämpfen abhängiges Ausgangssignal erzeugt und an der Klemme 44 zur Verfügung gestellt wird. Dieses Signal kennzeichnet den Beladungsgrad des Filters und kann zur Anzeige oder zur Auslösung eines Alarms verwendet werden. Die A/D-Umsetzung kann auch bereits unmittelbar nach Erzeugung bzw. Verstärkung der von den Empfangswandlern 14, 24 bzw. an den Widerständen 37, 38 erzeugten Spannungen, also noch vor der Subtraktion der Referenzzellensignale von den Meßzellensignalen erfolgen. Die Subtrahierer 34 und 39 zusammen mit der Auswerteschaltung 43 und ggf. auch noch mit dem Oszillator 31 und der stabilisierten Gleichspannungsquelle können durch einen einzigen Mikroprozessor realisiert werden.

Durch den Vergleich der elektrischen Impedanzen von Meßund Referenzkammer einerseits und der akustischen Impedanzen von Meß und Referenzkammer andererseits läßt sich in der geschilderten Weise die Beladung der Meßkammer mit Fremdstoffen ermitteln. Der Unterschied in der elektrischen Impedanz ergibt sich aus der Beladung mit Wasserdampf, während der Unterschied in der akustischen Impedanz von der Beladung mit Gasen oder Dämpfen, einschließlich Wasserdampf herrührt. Durch Vergleich der akustischen und der elektrischen Impedanzänderung wird ein allein von der Beladung des Filters mit Gasen und Dämpfen ohne Wasserdampf abhängiges, und damit den Erschöpfungsgrad des Filters anzeigendes Signal ermittelt. Durch Vergleich des Ausgangssignals an der Klemme 44 mit einem Schwellwertsignal läßt sich bei Überschreiten eines die Erschöpfung des Filters anzeigenden Schwellwerts ein akustischer oder optischer Alarm auslösen, um dem Benutzer anzuzeigen, daß das Filter erschöpft ist und ausgetauscht werden muß.

In einer weiteren Ausgestaltung kann die Vorrichtung in eine Nebenschlußleitung zum Filter fest integriert werden. Beispielsweise können die Rohrwände der Nebenschlußleitung in einem Teilabschnitt gleichzeitig die Meßkammer bilden. Bei einer solchen Anordnung ist darauf zu achten, daß der Beladungsgrad des Probevolumens in der Nebenschlußleitung eine eindeutige Aussage über den Beladungsgrad des parallel geschalteten Filters erlaubt. Das ist u. a. durch geeignete Luftführung und angepaßte Aktivkohleschichtdicke in der Nebenschlußleitung sicherzustellen.

Anstatt wie im gezeigten Ausführungsbeispiel die akustische und die elektrische Impedanz des unbeladenen Filters ständig zu messen, können diese Referenzwerte auch durch einmal ermittelte Bezugskurven oder Bezugswerte dargestellt werden, welche dann mit den jeweils gemessenen Werten der elektrischen und der akustischen Impedanz der Aktivkohleschicht in der Meßzelle verglichen werden. In diesem Fall entfällt die Referenzkammer 20 und die zugehörige elektrische Schaltung. Allerdings muß darauf geachtet werden, daß die Bezugswerte der akustischen und der elektrischen Impedanz von der Art und der Packungsdichte der Aktivkohle in der Meßkammer abhängen. Bei Verwendung einer anderen Kohle oder einer anderen Körnung ist folglich eine Korrektur der entsprechenden Bezugswerte erforderlich. Das Verfahren kann derart ausgeführt werden, daß der Meßwert der elektrischen Impedanz mit einer Eichkurve verglichen wird, welche die elektrische Impedanz in Abhängigkeit vom Wassergehalt des Filters angibt. Hieraus wird der Wassergehalt des Filters ermittelt. Anschließend wird mit Hilfe einer zweiten Eichkurve, welche die akustische Impedanz in Abhängigkeit vom Wassergehalt angibt, die akustische Impedanz berechnet. Dieser Wert der akustischen Impedanz bei dem ermittelten Wassergehalt wird vom Meßwert der akustischen Impedanz abgezogen, welcher nicht nur von der Beladung mit Wasserdampf, sondern auch von der Beladung mit anderen Dämpfen und Gasen abhängt. Hieraus erhält man einen Differenzwert, welcher auf die Beladung mit solchen anderen Gasen und Dämpfen zurückzuführen ist. Die Verwendung solcher Eichkurven und die hierbei erforderliche Berücksichtigung von Art und Körnigkeit der Aktivkohle kann entfallen, wenn man wie im Ausführungsbeispiel eine Meßkammer und eine Referenzkammer mit der gleichen Kohle füllt und die Impedanzmessungen an beiden Kammern ständig durchführt und die Werte vergleicht.

Die Ermittlung der elektrischen Impedanz bzw. Impedanzänderung kann nicht nur, wie im Ausführungsbeispiel dargestellt, durch Messen des ohm'schen Widerstandes erfolgen, sondern man kann auch andere bekannte Impedanzmeßschaltungen anwenden, beispielsweise auch solche zur Messung von Blindwiderstandsanteilen. Dabei kann die Verwendung von Wechselspannung oder Wechselstrom vorteilhaft sein, um elektrochemische Prozesse an den Elektroden, insbesondere Ablagerungen zu vermeiden.

**Patentansprüche**

1. Verfahren zum Feststellen der Beladung von Aktivkohlefiltern mit Gasen oder Dämpfen, bei dem die elektrische Impedanz eines durch die Gase oder Dämpfe beaufschlagten Materials gemessen wird, gekennzeichnet durch

a) die Messung der akustischen Impedanz eines Teilvolumens des Filters ;

b) Vergleich der gemessenen akustischen Impedanz mit einem einem unbeladenen Filter entsprechenden Bezugswert ;

c) Messung der elektrischen Impedanz dieses Teilvolumens des Filters ;

d) Vergleich der gemessenen elektrischen Impedanz mit einem einem unbeladenen Filter entsprechenden Bezugswert ;

e) Ermittlung eines von der Beladung abhängigen elektrischen Signals durch Vergleich der elektrischen Impedanzänderung mit der akustischen Impedanzänderung gegenüber den zugehörigen Bezugswerten.

2. Verfahren nach Anspruch 1, dadurch gekennzeichnet, daß die Bezugswerte der elektrischen und der akustischen Impedanz in Form von Vergleichskurven eingegeben werden, welche die Abhängigkeit der jeweiligen Impedanz vom Wassergehalt des Filters angeben.

3. Verfahren nach Anspruch 1 oder 2, dadurch gekennzeichnet, daß

a) der Meßwert der elektrischen Impedanz mit einer Eichkurve verglichen wird, welche die elektrische Impedanz in Abhängigkeit vom Wassergehalt des Filters angibt, und daraus der Wassergehalt des Filters ermittelt wird ;

b) mit Hilfe einer zweiten Eichkurve, welche die akustische Impedanz in Abhängigkeit vom Wassergehalt angibt, die akustische Impedanz berechnet wird ; und

c) dieser berechnete Wert vom Meßwert der akustischen Impedanz abgezogen und so ein Differenzwert ermittelt wird, der auf die Beladung mit anderen Gasen und Dämpfen zurückzuführen ist.

4. Verfahren nach Anspruch 1, gekennzeichnet durch die fortlaufende Ermittlung der Bezugswerte durch Messung der akustischen und der elektrischen Impedanz eines unbeladenen Bezugsvolumens.

5. Verfahren nach einem der Ansprüche 1 bis 4, dadurch gekennzeichnet, daß die akustische Impedanz in einem von Art und Körnung der Aktivkohle abhängigen Frequenzbereich gemessen und hieraus ein Mittelwert gebildet wird.

6. Vorrichtung zur Durchführung des Verfahrens nach Anspruch 1, dadurch gekennzeichnet, daß

a) in einer Meßkammer (10) jeweils durch eine Aktivkohleschicht voneinander getrennt ein elektroakustischer Sendewandler (13) und ein akustoelektrischer Empfangswandler (14) angeordnet sowie zwei Elektroden (137, 147) vorgesehen sind ;

b) der Sendewandler (13) an einen Signalgenerator (31) und der Empfangswandler (14) über einen Verstärker (32) an einen Vergleicher (34) angeschlossen ist, der das der akustischen Impedanz der Aktivkohleschicht in der Meßkammer (10) entsprechende Meßsignal mit einem der akustischen Impedanz einer unbeladenen Aktivkohleschicht entsprechenden Signal vergleicht ;

c) die beiden Elektroden (137, 147) an eine Spannungsquelle (36) sowie an eine Strommeßschaltung (37) angeschlossen sind, welche ein der elektrischen Impedanz der Aktivkohleschicht in der Meßkammer (10) entsprechendes Meßsignal erzeugt ;

d) einem zweiten Vergleicher (39) dieses der elektischen Impedanz der Aktivkohleschicht in der Meßkammer (10) entsprechende Signal sowie ein der elektrischen Impedanz einer unbeladenen Aktivkohleschicht entsprechendes Signal zugeführt sind ;

e) den Eingängen einer Auswerteschaltung (43) die der beladungsabhängigen Änderung der akustischen und der elektrischen Impedanz entsprechenden Signale zugeleitet werden, welche an ihrem Ausgang (44) um ein die Wasserdampfbelastung korrigiertes, von der Beladung mit anderen Dämpfen und Gasen abhängiges Ausgangssignal liefert.

7. Vorrichtung nach Anspruch 6 zur Durchführung des Verfahrens nach Anspruch 4, dadurch gekennzeichnet, daß

a) außer der Meßkammer (10) eine mit unbeladener Aktivkohle gefüllte und verschlossene Referenzkammer (20) vorhanden ist, in der jeweils durch eine aus der gleichen Aktivkohle wie in der Meßkammer bestehende Aktivkohleschicht voneinander getrennt ein elektroakustischer Sendewandler (23) und ein akustoelektrischer Empfangswandler (24) angeordnet sowie zwei Elektroden (237, 247) vorgesehen sind ;

b) der Sendewandler (23) an den Signalgenerator (31) und der Empfangswandler (24) über einen Verstärker (33) an den Vergleicher (34) angeschlossen ist, der das der akustischen Impedanz der Aktivkohleschicht in der Meßkammer entsprechende Meßsignal mit dem der akustischen Impedanz der Referenzkammer entsprechenden Signal vergleicht ;

c) die beiden weiteren Elektroden (237, 247) an die Spannungsquelle (36) sowie eine weitere Strommeßschaltung (38) angeschlossen sind, welche ein der elektrischen Impedanz der Aktivkohleschicht in der Referenzkammer (20) entsprechendes Meßsignal erzeugt ;

d) dem zweiten Vergleicher (39) die beiden der elektrischen Impedanz der Aktivkohleschicht in der Meßkammer (10) und in der Referenzkammer (20) entsprechenden Signale zugeführt werden.

8. Vorrichtung nach Anspruch 7, dadurch gekennzeichnet, daß die Meßkammer (10) an der Stirnfläche und zwei gegenüberliegenden Seitenflächen (11, 12) zur Aufnahme der Aktivkohle offen ist, während die Referenzkammer (20) hermetisch abgeschlossen ist und unbeladene Aktivkohle enthält, und daß eine dritte Kammer (15) die elektronischen Bauteile zur Energieversorgung, Signalerzeugung und Signalauswertung enthält.

9. Vorrichtung nach Anspruch 6 oder 8, dadurch gekennzeichnet, daß die Meßkammer (10) integraler Bestandteil einer dem Filter parallelgeschalteten Leitung ist, die von einem Teil des Luftstroms durchströmt wird.

## Claims

1. A method for determining the charging of a charcoal filter with gases or vapors, whereat the electrical impedance of a material is measured, which material is exposed to the gases or vapors, characterized by

a) measuring the acoustical impedance of a partial volume of the filter ;

b) comparing the measured acoustic impedance with a reference value corresponding to a non-charged filter ;

c) measuring the electrical impedance of this partial volume of the filter ;

d) comparing the measured electrical impedance with a reference value derived from a non-charged filter ; and

e) determining an electrical signal depending on the charging by comparing the change of the electrical impedance with the change of the acoustical impedance in relation to the associated reference values.

2. A method according to claim 1, characterized in that the reference values of the electrical and the acoustical impedance are provided in the form of reference curves which show the dependency of the concerned impedance on the water content of the filter.

3. A method according to claim 1 or 2, characterized in that

a) the measuring value of the electrical impedance is compared with a calibration curve which shows the electrical impedance dependent on the water content of the filter and from this comparison the water content of the filter is calculated ;

b) by means of a second calibration curve the acoustical impedance is calculated with said second calibration curve showing the acoustical impedance dependent on the water content ; and

c) this calculated value is subtracted from the measuring value of the acoustical impedance and therewith a differential value is calculated which depends on the charging of the charcoal filter with other gases and vapors.

4. A method according to claim 1, characterized by the continuous determination of the reference values by measuring the acoustical and the electrical impedance of a non-charged reference volume.

5. A method according to one of the claims 1 to 4, characterized in that the acoustical impedance is measured in a frequency range which depends on the type and grain size of the charcoal and from this measuring value an average value is derived.

6. An apparatus for performing the method according to claim 1, characterized in that

a) in a measuring chamber (10) separated by a charcoal layer there are provided an electroacoustic transmitting transducer (13) and an acoustoelectrical receiving transducer (14) together with two electrodes (137, 147) ;

b) the transmitting transducer (13) is connected to a signal generator (31) and the receiving transducer (14) is connected to a comparator (34) via an amplifier (32), with said comparator comparing a measuring signal corresponding to the acoustical impedance of the charcoal layer in the measuring chamber (10), with a corresponding signal indicating the acoustical impedance in a non-charged charcoal layer ;

c) the two electrodes (137, 147) are connected to a voltage source (36) and to a current measuring circuit (37) which generates a measuring signal depending on the electrical impedance of the charcoal layer in the measuring chamber (10) ;

d) a second comparator (39) is supplied with this measuring signal corresponding to the electrical impedance of the charcoal layer in the measuring chamber (10) and is furthermore supplied with a signal corresponding to the electrical impedance of a non-charged charcoal layer ; and

e) an evaluating circuit (43) receives at its inputs the electrical signals corresponding to the change of the acoustical and the electrical impedance dependent on the charging condition of the filter and which evaluation circuit (43) delivers at its output (44) an output signal which is corrected with respect to the charge of the filter with water vapor and which depends only on the charge with other vapors and gases.

7. Apparatus according to claim 6 for performing the method of claim 4, characterized in that

a) it comprises besides the measuring chamber (10) a reference chamber (20) filled with non-charged charcoal and closed, in which reference chamber (20) a layer of charcoal consisting of the same charcoal as in the measuring chamber separates an electroacoustic transmitting transducer (23) from an acoustoelectrical receiving transducer (24) and two electrodes (237, 247) from each other ;

b) the transmitting transducer (23) is connected to a signal generator (31) and the receiving transducer (24) is connected to the comparator (34) via an amplifier (33), with said comparator (34) comparing a measuring signal corresponding to the acoustical impedance of the charcoal layer in the measuring chamber (10) with the signal corresponding to the acoustical impedance of the reference chamber (20) ;

c) the two electrodes (237, 247) are connected to the voltage source (36) and to a further current measuring circuit (38) which generates a measuring signal corresponding to the electrical impedance of the charcoal layer in the reference chamber (20) ; and

d) the second comparator (39) is supplied with the two electrical signals corresponding to the electrical impedance of the charcoal layer in the measuring chamber (10) and in the reference chamber (20).

8. Apparatus according to claim 7, characterized in that the measuring chamber (10) at its front surface and at two opposite sides (11, 12) is open for being filled with charcoal, whereat the reference chamber (20) is hermetically sealed and filled with non-charged charcoal, and that a third chamber (15) comprises the electronic components for power supply, signal generation and signal processing.

9. Apparatus according to claim 6 or 8, characterized in that the measuring chamber (10) is an integral portion of a shunt tube provided in parallel to the filter with a part of the air flow flowing through said shunt tube.

**Revendications**

1. Procédé pour déterminer la charge de filtres de charbon actif par des gaz ou des vapeurs, dans lequel on mesure l'impédance électrique d'un matériau chargé de gaz ou de vapeurs, caractérisé par

a) la mesure de l'impédance acoustique d'un volume partiel du filtre ;

b) la comparaison de l'impédance acoustique mesurée avec une valeur de référence correspondant à un filtre non chargé;

c) la mesure de l'impédance électrique de ce volume partiel du filtre ;

d) la comparaison de l'impédance électrique mesurée avec une valeur de référence correspondant à un filtre non chargé;

e) la détermination d'un signal électrique dépendant de la charge par comparaison de la variation d'impédance électrique avec la variation d'impédance acoustique par rapport aux valeurs de référence correspondantes.

2. Procédé selon la revendication 1, caractérisé en ce que les valeurs de référence des impédances électrique et acoustique sont présentées sous forme de courbes de comparaison qui expriment la dépendance de l'impédance concernée de la teneur en eau du filtre.

3. Procédé selon la revendication 1 ou 2, caractérisé en ce que

a) la valeur mesurée de l'impédance électrique est comparée avec une courbe d'étalonnage qui exprime l'impédance électrique en fonction de la teneur en eau du filtre et qu'à partir de là on détermine la teneur en eau du filtre ;

b) que l'impédance acoustique est calculée à l'aide d'une deuxième courbe d'étalonnage qui exprime l'impédance acoustique en fonction de la teneur en eau, et

c) que cette valeur calculée est soustraite de la valeur mesurée de l'impédance acoustique et que l'on trouve ainsi une différence qui est attribuée à la charge en d'autres gaz et vapeurs.

4. Procédé selon la revendication 1, caractérisé par la détermination en continu des valeurs de référence par mesure des impédances acoustique et électrique d'un volume de référence non chargé.

5. Procédé selon l'une des revendications 1 à 4, caractérisé en ce que l'impédance acoustique est mesurée dans une gamme de fréquences dépendant du type et de la granulation du charbon actif et qu'il en résulte une valeur moyenne.

6. Dispositif pour la mise en œuvre du procédé selon la revendication 1, caractérisé en ce que

a) un transducteur-émetteur électro-acoustique (13) et un transducteur-récepteur acoustico-électrique (14), séparés l'un de l'autre par une couche de charbon actif, sont disposés dans une chambre de mesure (10) et qu'il est prévu deux électrodes (137, 147) ;

b) le transducteur-émetteur (13) est relié à un générateur de signaux (31) et que le transducteur-récepteur (14) est relié, par l'intermédiaire d'un amplificateur (32), à un comparateur (34) qui compare le signal de mesure correspondant à l'impédance acoustique de la couche de charbon actif dans la chambre de mesure (10) avec un signal correspondant à l'impédance acoustique d'une couche de charbon actif non chargée ;

c) les deux électrodes (137, 147) sont reliées à une source de tension (36), de même qu'à un circuit de mesure de courant (37) qui produit un signal de mesure correspondant à l'impédance électrique de la couche de charbon actif dans la chambre de mesure (10) ;

d) ce signal correspondant à l'impédance électrique de la couche de charbon actif dans la chambre de mesure (10) ainsi qu'un signal correspondant à l'impédance électrique d'une couche de charbon actif non chargée sont envoyés dans un deuxième comparateur (39) ;

e) les signaux correspondent à la variation des impédances acoustique et électrique dépendant de la charge sont envoyés vers les entrées d'un circuit de traitement (43) qui délivre, à sa sortie (44), un signal de sortie corrigé quant à sa charge en vapeur d'eau qui dépend de la charge en autres gaz et vapeurs.

7. Dispositif selon la revendication 6 pour la mise en œuvre du procédé selon la revendication 4, caractérisé en ce que

a) il comporte, en dehors de la chambre de mesure (10), une chambre de référence (20) close et remplie de charbon actif non chargé dans laquelle sont disposés un transducteur-émetteur électro-acoustique (23) et un transducteur-récepteur acoustico-électrique (24) séparés l'un de l'autre par une couche de charbon actif constituée par le même charbon actif que celui de la chambre de mesure et qu'il est prévu deux électrodes (237, 247) ;

b) le transducteur-émetteur (23) est relié au générateur de signaux (31) et que le transducteur-récepteur (24) est relié, par l'intermédiaire d'un amplificateur (33), au comparateur (34) qui compare le signal de mesure correspondant à l'impédance acoustique de la couche de charbon actif dans la chambre de mesure avec le signal correspondant à l'impédance acoustique de la chambre de référence ;

c) les deux autres électrodes (237, 247) sont reliées à la source de tension (36) ainsi qu'à un autre circuit de mesure de courant (38) qui produit un signal de mesure correspondant à l'impédance électrique de la couche de charbon actif dans la chambre de référence (20) ;

d) les deux signaux correspondant à l'impédance électrique de la couche de charbon actif dans la chambre de mesure (10) et dans la chambre de référence (20) sont envoyés dans le deuxième comparateur (39).

8. Dispositif selon la revendication 7, caractérisé en ce que la chambre de mesure (10) est ouverte sur la face frontale et sur deux faces latérales opposées (11, 12) pour recevoir le charbon actif, tandis que la chambre de référence (20) est hermétiquement close et contient du charbon actif non chargé et en ce qu'une troisième chambre (15) abrite les composants électroniques pour l'alimentation en énergie, la production et le traitement des signaux.

9. Dispositif selon la revendication 6 ou 8, caractérisé en ce que la chambre de mesure (10) fait partie intégrante d'un circuit monté en parallèle par rapport au filtre qui est traversé par une partie du courant d'air.

Fig. 1

0 231 405

Fig. 2

Fig. 3